# EUROPÄISCHE PATENTSCHRIFT

(11) **EP 1 799 950 B1**
(45) Veröffentlichungstag und Bekanntmachung des Hinweises auf die Patenterteilung: **18.12.2013**
(21) Anmeldenummer: 05793567.8
(22) Anmeldetag: 06.10.2005
(51) Int. Cl.: E06B 7/10, E06B 1/28, F24F 12/00, E06B 3/30

(54) **RAHMEN, INSBESONDERE FÜR FENSTER- , TÜREN- ODER FASSADENELEMENTE**
FRAME, IN PARTICULAR FOR WINDOW, DOOR OR FAÇADE ELEMENTS
CADRE, NOTAMMENT POUR ELEMENTS DE FENETRE, DE PORTE OU DE FAÇADE

(30) Priorität: 09.10.2004 DE 102004049335
(43) Veröffentlichungstag der Anmeldung: 27.06.2007
(73) Patentinhaber: Westermann, Josef, 49439 Steinfeld (DE)
(72) Erfinder: Westermann, Josef, 49439 Steinfeld (DE)
(74) Vertreter: Pott, Ulrich
(86) Internationale Anmeldenummer: PCT/EP2005/010769
(87) Internationale Veröffentlichungsnummer: WO 2006/040070

(56) Entgegenhaltungen:
- EP-A- 0 491 409
- EP-A- 1 445 415
- DE-A1- 3 124 545
- DE-A1- 3 802 583
- DE-U1- 20 105 296
- DE-U1- 20 220 923
- US-A- 4 186 656

## Beschreibung

Die Erfindung betrifft einen Rahmen zur Verwendung in Wandöffnungen von Räumen, insbesondere für Fenster-, Türen- oder andere Fassadenelemente, mit einem Rahmenprofil, welches zumindest ein Gründrahmenprofil umfasst und einen Hohlraum zur Lüftung aufweist, welcher über Öffnungen mit einer Innenseite und einer Außenseite des Raumes verbindbar ist.

Moderne Fenster-, Türen- und Fassadenelemente verschließen Gebäudeöffnungen so, dass praktisch kein Luftaustausch zwischen dem Rauminneren und der meist im Freien befindlichen Raumaußenseite stattfindet. Bei solcher Art verschlossenen Räume treten daher häufig Probleme aufgrund ungenügender Lüftung und vermehrtem Schimmelpilzbefall auf, was allgemein zu einem schlechten Raumklima führt.

Zur Lösung dieses Problems schlägt die DE 201 05 296 U1 eine Lüftungsvorrichtung für Fenster-, Türen-, Fassadenelemente oder dgl. vor, die einen in einem Rahmen oder zwischen einem Blendrahmen und einem Flügelrahmen angeordneten Hohlraum aufweist, der zur Lüftung über Öffnungen mit einem Innenraum und einer Umgebung verbindbar ist, wobei die Öffnungen mittels eines Schiebers schließbar sind. Somit soll auch bei geschlossener Wandöffnung eine regelbare Lüftung möglich sein.

Nachteilig ist hierbei, dass die Optik des Rahmens durch den Schieber leidet, sowie dass aufgrund der in den Dichtungen vorzunehmenden Öffnungen bzw. Aussparungen die Isolationswirkung des Rahmens in geschlossenem Zustand verringert ist.

Aus der DE 202 20 923 U1 ist ein Gegenstand nach dem Oberbegriff des Anspruchs 1 bekannt, bei der ein Lüfter innerhalb eines zylindrischen Rohres angeordnet ist. Nicht gezeigt ist, dass es sich bei dem aufgrund seiner Form einen Luftweg ausbildenden Lüfterelement um ein drehbares Lüfterrohr handelt. Bei dem Hohlraum, in dem das Lüfterelement angeordnet ist, handelt es sich um eine separat in den Rahmen einzufräsenden Bereich des oberen Blendrahmens.

Aus der D3 ist die Verwendung eines drehbaren Lüfterelements bekannt, welches bei dem Einbau eines Lüftungssystems einen Rahmen als separates und unabhängiges von einem umlaufenden Rahmen an diesen anflanschbares Element handelt. Sowohl die Lösung nach der DE 202 20 923 U1 als auch die nach der US 4 186 656 A haben gemeinsam, dass die Lüfterelemente in separat herzustellenden Rahmenteilen angeordnet sind.

Es ist daher Aufgabe der vorliegenden Erfindung, einen Rahmen für eine Tür, ein Fenster oder ein Fassadenelement oder dgl. mit einer verbesserten Lüftungsvorrichtung zu schaffen.

Die Aufgabe wird gelöst durch einen Gegenstand gemäß Anspruch 1. Der Gegenstand der eingangs genannten Art weist ein in einem Hohlraum beweglich angeordnetes Lüfterelement auf, welches zumindest einen Luftweg ausbildet und dessen Hauptachse parallel zur Längserstreckung des Rahmenprofils verläuft, sowie welches weiterhin Teil eines Lüftungssystems ist. Durch die Verlagerung eines bewegbaren Teils des Lüftungssystems in den Rahmen hinein ist zum einen die Optik des erfindungsgemäßen Rahmens verbessert, zum anderen der vorhandene Innenraum des Rahmens optimal genutzt. Durch die Ausrichtung der Hauptachse des beweglichen Lüfterelementes parallel zur Längserstreckung des Rahmenprofils steht darüber hinaus mehr Platz für das Lüfterelement zu Verfügung. Die Bewegung des Lüfterelementes führt zur lüftungsmäßigen Verbindung von Innenseite und Außenseite durch den vom Lüfterelement aufgrund dessen Form ausgebildeten Luftweg, bzw. zur Unterbrechung dieser Verbindung durch einen nicht den Luftweg ausbildenden Bereich des Lüfterelements. In dieser grundlegenden Ausführung ist das Lüftungssystem im wesentlichen durch das Lüfterelement gebildet.

Bei einer vorteilhaften Ausführung der Erfindung ist das Lüfterelement in zumindest eine, vorzugsweise zwei Lüfterelementkammern, geteilt, wobei durch Bewegung oder Lageveränderung des Lüfterelementes eine der Lüfterelementkammern eine Lüftungsverbindung zwischen Luftzuführ- bzw. Luftabführbereichen schafft, welche auf zumindest zwei Seiten des Hohlraumes der Innen- und Außenseite des Raumes zugeordnet befindlich sind. Unter Luftzuführ- bzw. Luftabführbereich sind hierbei die Bereiche des Rahmens außerhalb des Lüfterelements oder des Hohlraumes zu verstehen, durch die je nach Strömungsrichtung der Luft diese dem Raum zu- oder abgeführt wird. Die den Luftweg ausbildende Lüfteretementkammer ist mit Öffnungen versehen, durch die Luft hindurchströmen kann, wobei eine solche Lüfterelementkammer auch mittels der Wandung des Hohlraumes ausbildbar ist. Die zweite Lüfterelementkammer kann beispielsweise mit Dämmmaterial gefüllt sein, um in der Geschlossenstellung eine gute Isolierung zu gewährleisten.

Durch die Vielzahl der möglichen Anordnungen der Luftzuführ- bzw. Luftabführbereiche, sowie die Möglichkeit, das Lüfterelement in ein, zwei oder mehr Lüfterelementkammern zu unterteilen, welche dann jeweils verschiedene Verbindungsmöglichkeiten zwischen den einzelnen Luftzuführ- und Luftabführbereichen ermöglichen, ist der erfindungsgemäße Rahmen für eine Vielzahl von verschiedenen Lüftungsbedingungen venrvendbar.

So liegt es im Rahmen der Erfindung z.B. einen durch das Lüfterelement ausgebildeten Luftweg mit einem Pollenfilter zu versehen, damit bei Pollenflug auch Allergiker in den Vorteil von pollenfreier Raumluft gelangen können. Alternativ dazu kann beispielsweise bei Regen oder bei nichtpollenhaltiger Luft ein weiterer Luftweg oder Lüftungskanal gewählt werden, um die Belüftung des Raumes ohne den Pollenfilter zu gestatten.

Der erfindungsgemäße Rahmen bietet die Möglichkeit, das Lüftungssystem wie weiter unten beschrieben modulartig auszubauen.

Es liegt im Rahmen der Erfindung statt eines Pollenfilters einen anderen beliebigen Luftfilter zu verwenden und diesen in einen Luftzuführ- bzw. Luftabführbereich einzusetzen. Diese Bereiche werden durch das Rahmenprofil, also insbesondere komplett durch einen Blendrahmen, durch einen Flügelrahmen oder durch eine Kombination beider ausgebildet.

Bei einer weiteren vorteilhaften Ausgestaltung der Erfindung ist vorgesehen, zumindest einen Luftzuführ- oder Luftabführbereich gegenüber einer Innen- und/oder einer Außenseite des Raumes mit wenigstens einem perforierten und/odergeschlitzten Zusatzprofil abzugrenzen. Dieses Zusatzprofil ist vorzugsweise an das Grundrahmenprofil bzw. an das Rahmenprofil ansetzbar und dient zum einem dazu, einen ungehinderten Durchgang durch den geöffneten Lüftungsweg für beispielsweise Kleintiere zu vermeiden, zum anderen dazu, ein angenehmes Erscheinungsbild der Lüftungsöffnungen zu erzeugen. Auch in diesem Fall ist es möglich, das Zusatz- bzw. Begrenzungsprofil mit einem Filterstoff zu versehen, um beispielsweise Pollen aus der Luft herauszufiltern.

Das Lüfterelement kann als drehbares Lüfterrohr ausgebildet sein, wobei die zumindest eine Lüfterrohrkammer eine Lüfter-Verbindung zwischen Innen- und Außenseite des Raumes herstellt, die durch Drehung des Lüfterrohres um seine Achse unterbrochen werden kann.

In einer alternativen Ausbildung ist das Lüfterelement als entlang seiner Achse längsverschiebbares Kammerprofilelement ausgebildet.

Vorteilhafterweise ist das Lüfterelement, welches auch beispielsweise manuell bei geöffnetem oder mittels eines Betätigungselementes auch bei geschlossenem Fenster betätigt werden kann, mit Hilfe eines Motors verstellbar. Dieser Motor kann dann mit einer unauffällig angebrachten Steuerung oder auch einer Fernbedienung für die Einstellung des Lüftungssystems verwendet werden.

Gemäß einer weiteren vorteilhaften Ausführungsform der Erfindung weist das Lüftungssystem zusätzlich zumindest einen Sensor auf, besser noch zwei oder mehr Sensoren, die Umweltdaten außerhalb und/oder innerhalb des Raumes aufnehmen können. Zu diesen Umweltdaten zählen neben Temperatur und Luftfeuchtigkeit beispielsweise auch die Windsituation. Über die Sensoren werden die Daten an die Steuerung bzw. Steuerelektronik weitergegeben, die dann die Belüftung des Raumes in Abhängigkeit von den von zumindest einem Sensor aufgenommenen Daten steuert.

Zusätzlich ist es ebenfalls denkbar, das gesamte Lüftungssystem programmierbar zu gestalten bzw. auf Präferenzwerte einzustellen, so daß zum Beispiel während einer Abwesenheit eine automatische Belüftung des Raumes gewährleistet ist, ohne daß das Fenster geöffnet werden muss. Außerdem ist eine Lüftung des Raumes bei jeder Wetterlage möglich.

Für eine optimale Dämmung des Rahmens ist der nicht das Lüftungssystem aufweisende Teil des Hohlraumes mit Dämmstoff- oder -materialien abdichtbar. Ebenso können Teile des Lüfterelementes, die nicht einen Durchgang für ein- oder ausströmende Luft ausbilden, mit Dämmmaterialien angefüllt sein, um eine optimale Dämmung des Blendrahmens zu gewährleisten.

Die in einem Rahmen befindlichen Teile des Lüftungssystems sind bei einem Fenster vorzugsweise in den Seitenbereichen untergebracht. Aufgrund der identischen Struktur der Rahmenprofile in den oberen und unteren Bereichen eines Fensters kann der übrige, insbesondere also der obere oder untere Hohlraum statt für die Dämmung auch als Multifunktionskammer genutzt werden, in die beispielsweise eine Insektenschutzvorrichtung zum Verschließen des Fensters mit einem Insektennetz oder eine Verschattungsmembran zum Abdunkeln des Rauminneren eingebracht werden kann. Die seitlich angebrachten Aufsatzprofile des erfindungsgemäßen Rahmens können hierbei die seitlichen Führungsbereiche des Netzes bzw. der Membran darstellen, während der der Multifunktionskammer gegenüberliegende Rahmenbereich zu Aufnahme des Netz- oder Membranendes ausgebildet sein kann.

Bei geschlossenem Lüftungssystem verhindert eine Mehrzahl von Dichtungsebenen einen mit Energieverlust einhergehenden Luftstrom zwischen einem Flügel- und einem Blendrahmen eines Fensters, wozu insbesondere eine zentrale, umlaufende Dichtungsebene beiträgt.

Vorteilhafterweise ist der Teile des Lüftungssystems aufweisende Hohlraum in einem Bereich des Blendrahmens angeordnet, es liegt jedoch auch im Rahmen der Erfindung, den Hohlraum samt zugehörigen Teilen des Lüftungssystems in einem zu einem Blendrahmen gehörigen Flügelrahmen unterzubringen.

Die Aufgabe wird des weiteren durch eine Tür mit einem Rahmen gelöst, der die soeben beschriebenen Merkmale bzw. die weiter unten beschriebenen Merkmale aufweist. Statt einer Tür kann es sich hierbei auch um mit oder ohne Flügelrahmen versehene Fenster- oder andere Fassadenelemente handeln, die zum Verschließen von Gebäudeöffnungen verwendet werden.

Weitere Einzelheiten und Vorteile der Erfindung ergeben sich aus den nachfolgend beschriebenen schematischen Darstellungen verschiedener Ausführungsformen der Erfindung. In den Figuren zeigt:
- Fig. 1: Einen Blendrahmen in einem Horizontalschnitt, mit einem Flügelrahmen, wobei das Lüftungssystem links geöffnet und rechts geschlossen ist,
- Fig. 2: den Blendrahmen nach Fig. 1 in einer teilweise geschnittenen Gesamtansicht,
- Fig. 3: ein zweiteiliges Fenster mit Setzpfosten in einem Horizontalschnitt, wobei wiederum in dem linken Teil der Abbildung das Lüftungssystem geöffnet und in dem rechten Teil der Abbildung das Lüftungssystem geschlossen ist,
- Fig. 4: einen Vertikalschnitt durch eine Haustür mit einem erfindungsgemäßen Blendrahmen,
- Fig. 5: ein weiteres Ausführungsbeispiel eines erfindungsgemäßen Blendrahmens mit einem einen Wärmetauscher aufweisenden Lüftungssystem in einem Horizontalschnitt,
- Fig. 6: eine Explosionsdarstellung eines Teils des Gegenstandes nach Fig. 5,
- Fig. 7: einen Horizontalschnitt durch den Gegenstand nach Fig. 5 in einer Ausbausituation,
- Fig. 8: den Gegenstand nach Fig. 5 in einem Vertikalschnitt,
- Fig. 9: den Gegenstand nach Fig. 8 in einer Ausbausituation,
- Fig. 10: ein weiteres Ausführungsbeispiel der Erfindung mit einem einen Wärmetauscher aufweisenden Lüftungssystem, wobei der Wärmetauscher aufgrund einer den Raum versorgenden Klimaanlage modifiziert ist.

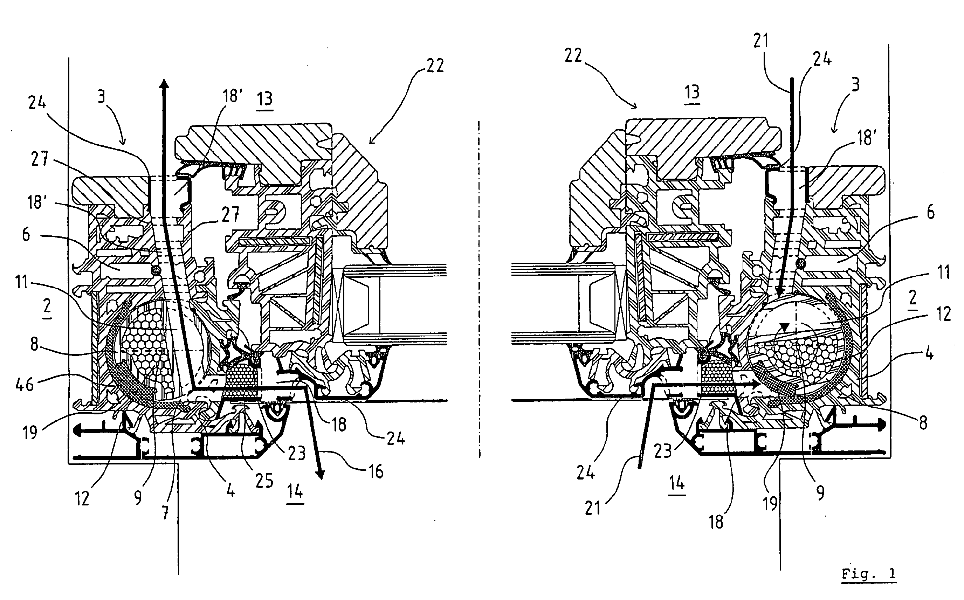

Ein erfindungsgemäßer Rahmen, hier ein Blendrahmen 1, der in einer Wand 2 angeordnet ist, ist im wesentlichen aus einem als Hohlprofil 3 ausgebildeten Rahmenprofil gebildet. Das Hohlprofil 3 wiederum weist ein als Grundhohlprofil 4 ausgebildetes Grundrahmenprofil auf, das neben mehreren Dämmhohlräumen 6 einen für die Lüftung vorgesehenen Hohlraum 7 zumindest teilweise begrenzt. In diesem Hohlraum 7 befindet sich ein Lüfterrohr 8, das um eine Achse 9, die seiner Längsachse entspricht, drehbar ist. Das Lüfterrohr 8 ist im Querschnitt im wesentlichen in zwei Kammern 11 und 12 unterteilt, von denen die Kammer 11 für eine Verbindung der Innenseite 13 des Raumes mit der Außenseite 14 des Raumes sorgen kann, wie dies im linken Teil der Fig. 1 dargestellt ist. Der schwarze Doppelpfeil 16 symbolisiert in diesem Teil der Figur die Verbindung zwischen der Innenseite 13 und der Außenseite 14.

Im rechten Teil der Figur 1 ist das Lüfterrohr 8 gegenüber dem Lüfterrohr 8 im linken Teil der Figur 1 verdreht, wie dies anhand des Pfeils 17 angedeutet ist. Statt einer Drehung im mathematisch negativen Sinn kann es sich hierbei natürlich auch um eine Drehung im mathematisch positiven Sinn handeln. Durch die Verdrehung des Lüfterrohres 8 wird ein zur Außenseite 14 hinweisender Luftzuführ- bzw. Luftabführbereich 18 von einem zur Innenseite 13 hinweisenden Luftzuführ- bzw. Luftabführbereich 18' durch eine hier als Hohlkammerdichtung 19 ausgebildete und auf der Außenseite der Lüfterrohrkammer 12 angeordnete Dichtung verschlossen. Damit ist die Lüftung unterbunden und die Innen- und Außenseiten 13 bzw. 14, bzw. die Luftzuführ- bzw. Luftabführbereiche 18, 18' sind voneinander getrennt, was durch die nun zwei Pfeile 21 angedeutet wird.

Vorteilhafterweise ist der Hohlraum 7 im Querschnitt im wesentlichen gerundet, wie dies auch der Fig. 1 zu entnehmen ist. Bei der Verwendung eines ebenfalls runden Lüfterrohres 8 ergeben sich somit deutliche Raumersparnisse gegenüber anderen Formenkombinationen. Es ist allerdings auch denkbar, den Hohlraum 7 beispielsweise im Querschnitt quadratisch oder in einer anderen Form auszubilden, und in diesen ein auch vorzugsweise rundes Lüfterrohr 8 einzusetzen, wobei dann die freibleibenden Bereiche des Hohlraumes 7 mit Dämmmaterial ausgefüllt werden könnten, um die Dämmwerte des erfindungsgemäßen Blendrahmens 1 weiterhin zu verbessern.

Das Grundhohlprofil 4 des erfindungsgemäßen Blendrahmens ist bei diesem Ausführungsbeispiel als Plattformprofil ausgebildet, an das in vielfältiger Art und Weise verschiedene weitere Profile angebracht werden können. Für die variable Ausgestaltung der Anbindungsmöglichkeiten an einen Flügelrahmen 22 wie auch für die variable Ausgestaltung des Blendrahmens 1 selbst können offene Bereiche des Hohlraumes 7 mit verschiedenen Profilleisten bereichsweise verschlossen werden. Die in der Fig. 1 abgebildete Profilleiste 23 dient der, bzw. unterstützt die Anlage eines Flügelrahmens 22 in der Schließstellung von Blendrahmen 1 und Flügelrahmen 22. Aufgrund der bereits erwähnten Ausbildung des Grundhohlprofils 4 als Plattformprofil liegt es im Rahmen der Erfindung, die zumindest auf zwei Seiten des Hohlraumes 7 befindlichen Luftzuführ- bzw. Luftabführbereiche 18, 18' auch durch Anbringung eines oder mehrerer Zusatzprofile 24 mit auszubilden. Die Verwendung dieser Zusatzprofile 24 führt zu einer weiterhin verbesserten Anpaßbarkeit des erfindungsgemäßen Blendrahmens 1 an beispielsweise verschiedene Fassadenoptiken.

Bei dem in Fig. 1 dargestellten linken Ausführungsbeispiel erfolgt die Luftzufuhr von der Außenseite 14 über das vorzugsweise perforierte und am Flügelrahmen 22 angeordnete, als Glasleiste ausgebildete Zusatzprofil 24 hinein in den außenseitigen Luftzuführ- bzw. Luftabführbereich 18 des Hohlraumes 7, der einen Pollenfilter 25 aufweist, und weiter durch entsprechende Längsschlitze der auch Blendrahmen-Verschlußdeckelprofil genannten Profilleiste 23 in den Hohlraum 7. Weiter führt der Lüftungsweg durch das geöffnete Lüfterrohr 8 und wiederum durch das mit Längsschlitzen geöffnete Grundhohlprofil 4 sowie innenseitig durch ein in vorstehende Adapterstege 27 eingeklemmtes, beispielsweise als perforiertes Alu-U-Profil ausgebildetes, den Abschluß des Luftzuführ- bzw. Luftabführbereich 18' zur Raumseite hin bildendes Zusatzprofil 24.

Die Dichtungsanschlagebenen des Blendrahmens 1 sind gleichzeitig mit Einlaßmöglichkeiten für verschiedene weitere Zusatzprofile ausgestattet, hierzu zählen Möglichkeiten zum Einrasten eines Zusatzprofils bei einer Blendrahmenfestverglasung oder auch das weiter unten beschriebene Zusatzprofil als Trittschutz bei der Ausbildung des unteren Bereiches des Blendrahmens 1 als Türschwelle. Das als Alu-Klemmprofil ausgebildete, auf der Rauminnenseite befindliche Zusatzprofil 24 -nicht das als Glasleiste ausgebildete Zusatzprofil 24 auf der Raumaußenseite- wie auch die Profilleiste 23, die als Blendrahmenverschlußdeckel dient, lassen sich zu Reinigungs- und Wartungszwecken mühelos herausnehmen und wieder einsetzen.

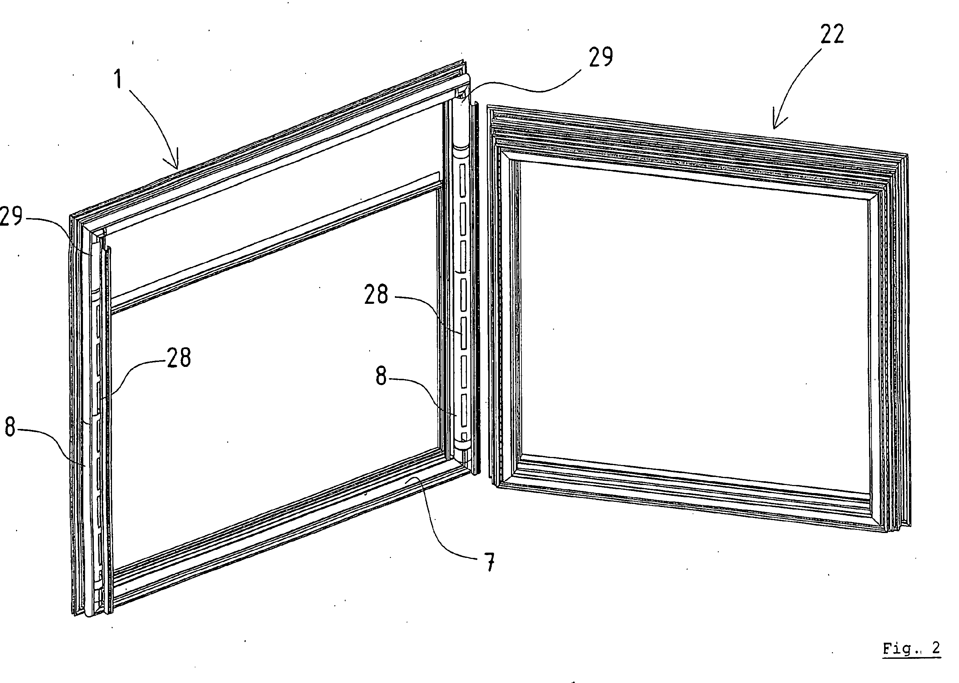

Vorteilhafterweise erstreckt sich der Hohlraum 7 sowie das darin angeordnete Lüfterrohr 8 zumindest über im wesentlichen eine Seite des Rahmens (Fig. 2). In der Figur 2 ist das Grundhohlprofil 4 nicht dargestellt, so daß der Hohlraum 7 bzw. die auf beiden Seiten der Öffnung 30 befindlichen Lüfterrohre 8 zu erkennen sind. Die Lüfterrohre 8 sind mit Ausnehmungen 28 versehen, durch die die Luft bei Lüftung hindurchtreten kann.

Oberhalb des Lüfterrohres 8 mit seinen Ausnehmungen 28 ist in dem Hohlraum 7 auf beiden Seiten des Rahmens jeweils ein Motor 29 angeordnet. Dieser Motor 29 verdreht in Abhängigkeit von Steuerimpulsen seiner Steuerung (bzw. seiner ggf. programmierbaren und/oder fernsteuerbaren Steuerelektronik) das jeweilige Lüfterrohr 8 in die gewünschte Position. Hierdurch wird außerhalb des Blendrahmens 1 kein zusätzlicher Bauraum benötigt und das gesamte Lüftungssystem kann bereits vor der Endmontage im Blendrahmen 1 eingesetzt werden.

Der erfindungsgemäße Blendrahmen 1, der auch aufgrund der Ausbildung des Grundhohlprofils 4 als Plattformprofil mit Mehrfachfunktionsfähigkeit sehr flexibel zu gestalten ist, ermöglicht eine Vielzahl von Lüftungsmöglichkeiten. Neben dem einfachen Öffnen des Flügels bei der Blendrahmen-Flügelrahmen Kombination kann ein passiver Luftaustausch durch motorisch verschließbare Lüftungskanäle realisiert werden.

Erfindungsgemäß ist es weiterhin vorgesehen, den Motor 29 mit Hilfe einer Fernsteuerung zu bedienen, so daß keine zusätzlichen Wandbereiche für die Steuerung benötigt werden. Eine Stromversorgung kann je nach Wunsch über Akkumulatoren des Motors 29, die von Zeit zu Zeit ausgetauscht oder induktiv geladen werden können, oder auch über elektrische, hier nicht dargestellte Anschlüsse an das Leitungsnetz sichergestellt werden. Die Anpassung des Motors 29 an die bereits vorhandenen Hohlräume 7 des Hohlprofils 3 führt zu einer sehr guten Nutzung der vorhandenen räumlichen Gegebenheiten innerhalb des Blendrahmens 1. Es müssen keine besonderen Ausgestaltungen des Hohlprofils 3 für die Anordnung des Motors 29 vorgesehen werden.

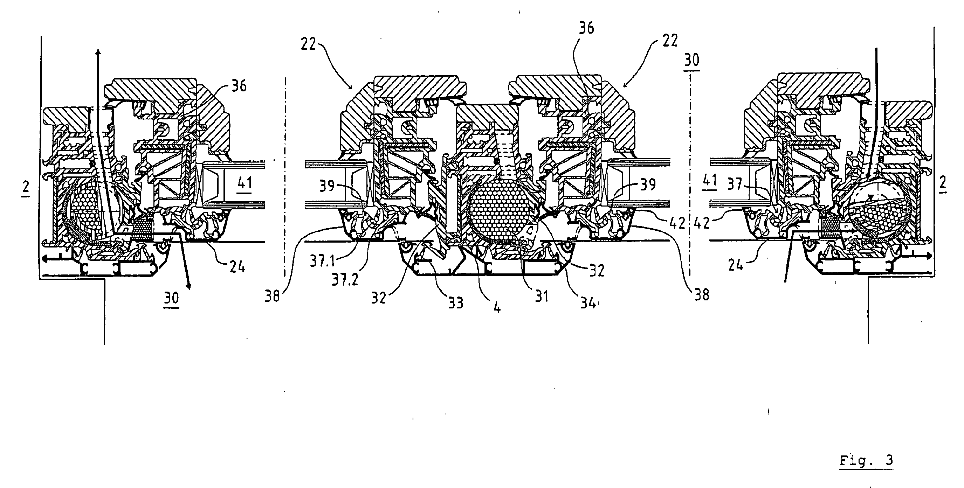

Gemäß Fig. 3 ist bei einer weiteren erfindungsgemäßen Ausgestaltung ein Teil des Hohlraumes 7, der nicht für die Lüftung verwendet wird, mit einem Dämmstoff 31 ausgefüllt (Fig. 3). Die Form des mit Dämmstoff ausgefüllten Grundhohlprofils 4 des Blendrahmens 1 entspricht dem Grundhohlprofil 4 auf den Seiten der Wandöffnung 30 wie bislang beschrieben. Zusätzlich kann jedoch dieser mittlere Teil des Blendrahmens 1 durch verschiedene Zusatzprofile als Setzpfosten für die Anlage an Flügelrahmen 22 ausgebildet werden. Vorteilhafterweise läßt sich das Grundhohlprofil 4 mit seinem Hohlraum 7 also aufgrund seiner Ausbildung als Plattformprofil auch für komplexere Fensterformen verwenden. Insbesondere aufgrund der Anbringung eines Profilteils 32, welches in diesem Beispiel einen identischen Anschlag für den Flügelrahmen 22 bereithält, und aufgrund eines Steges 33, der einem Steg 34 des Grundhohlprofils 4 entspricht, wird das Grundhohlprofil 4 bzw. das Hohlprofil 3 in einem zwischen den Seitenteilen des Blendrahmen 1 befindlichen Bereich zu einem Setzpfosten mit Anlagemöglichkeit für zwei Flügelrahmen 22.

Das Flügelgrundprofil 36 des Flügelrahmens 22 weist außenseitig jeweils einen Doppelsteg 37 als Rast- bzw. Klemmprofilsockel auf. Auf diesen Sockel wird bei Verwendung einer äußeren Schale 38 aus Metall ein zusätzliches PVC-Aufrastprofil 39 als Wärmedämmbrücke aufgeklipst. Das Aufrastprofil 39 kann ebenso als Hohlvorsatzschale ausgebildet werden und klemmt sich bei Andruck an die Scheibe 41 gegen den oberen vorgespannten Raststeg 37.1 des Flügelgrundprofils 36, unterseitig direkt an den Grundprofilsockel des Flügelgrundprofils 36 sowie gegen den unteren Steg 37.2 des Grundprofils 36. Das PVC-Aufrastprofil 39, welches auch aus anderen Materialien hergestellt werden kann, kann sich somit im vorgespannten Klemmprofil des Grundprofils 36 frei bewegen, ohne sich selbstständig abzulösen. Dieses ist von Vorteil, wenn es bei den verwendeten Materialien zu unterschiedlichen thermischen Längendehnungen kommt.

Vorteilhafterweise kann das Aufrastprofil dadurch zerstörungsfrei abgenommen werden, daß die äußere Glasdichtung 42 entfernt wird und der obere dem Glasfalz zugewande Klemmsteg 37.1 aus dem Aufrastprofil 39 gedrückt wird. Die außenseitige Schale 38 entspricht hierbei dem als Glasleiste ausgebildetem Zusatzprofil 24, welches allerdings ebenso Öffnungen zur (Mit-) Ausbildung eines Luftzuführ- oder Luftabführbereiches 18 aufweist. Bei einer solchen Ausbildung als Fenster versteht es sich, die Aufsatzleisten lediglich im oberen Rahmenbereich des Fenster wie auch in den seitlichen Rahmenbereichen mit Lüftungsschlitzen zu versehen, während der untere Rahmenbereich keine Lüftungsschlitze aufweist, um das Eindringen von Wasser zu verhindern.

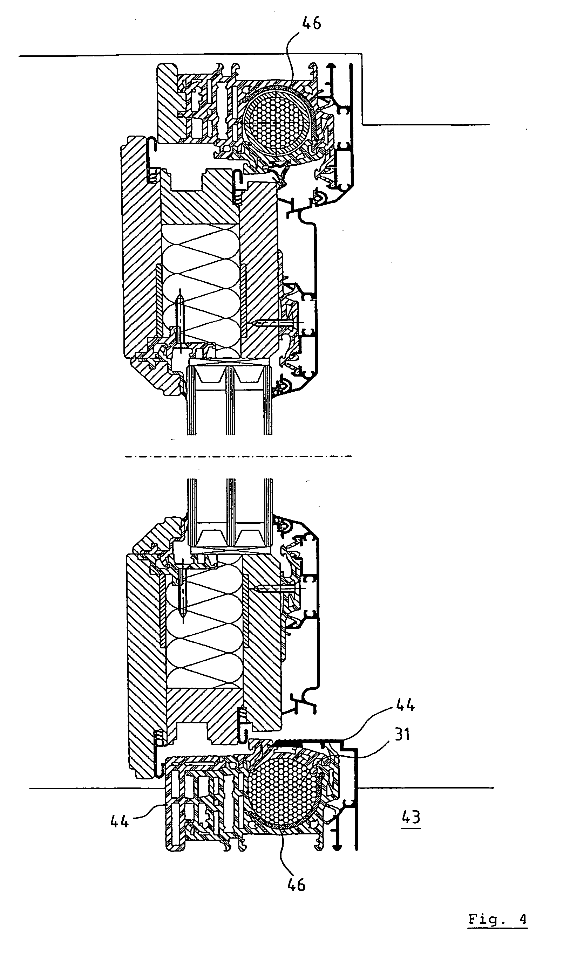

Der erfindungsgemäße Rahmen nach Fig. 4 ist als Haustürschwellenadapter ausgebildet und weist hierfür in seinem unteren, dem Boden 43 nahen Bereich trittfeste, aufgesetzte Deckprofile 44 auf. Der untere Hohlrahmen 7 ist wiederum mit einem Dämmstoff 31 ausgefüllt, während je nach Anforderung beispielsweise die Seitenbereiche der hier als Tür ausgebildeten Blendrahmen-Flügelrahmen Kombination ebenfalls Lüftungssysteme beinhalten können. Zusätzliche Einlagen 46 aus Glasfaserkunststoff oder anderen aussteifenden Materialien, die nicht nur bei diesem Ausführungsbeispiel an den Hohlraum 7 angrenzend bzw. in den Blendrahmen 1 eingesetzt sind und die sich auch in den Ausführungsbeispielen der bisherigen Figuren finden, dienen der zusätzlichen Stabilisierung des tragenden Hohlprofils 3.

Bei einer weiteren vorteilhaften Ausgestaltung der Erfindung ist an das Grundhohlprofil 4' ein Wärmetauscherprofil 47, welches einen Wärmetauscher 48 beinhaltet, angesetzt. Hierfür ist das Grundhohlprofil 4' gegenüber seinen bisherigen Querschnittsformen leicht geändert ausgeführt. Aufgrund des Wärmetauschers 48 reicht das Wärmetauschprofil 47 gegebenenfalls bis in die Wand hinein, wofür in dieser entsprechende Ausnehmungen vorzusehen sind.

Der Wärmetauscher 48 ist vorteilhafterweise über das Lüfterrohr 8 ansteuerbar ausgebildet, wofür dieses nicht nur eine Zweikammerunterteilung aufweist, sondern um die jeweils zwei Luftströme zur Rauminnenseite und zur Raumaußenseite zu gewährleisten, insbesondere entlang seiner Längsachse eine komplexere Mehrkammerunterteilung besitzt. Die Unterteilung kann auch davon abhängig gemacht werden, ob der Wärmetauscher 48 zusätzlich zu einer Lüftung oder beispielsweise alleine den Luftstrom regeln soll. Für die Anbindung des Wärmetauschers 48 ist es weiterhin denkbar, die warme, aus dem Rauminneren 13 hinauszubefördernde Raumluft über Lüftungsöffnungen in einem oberen Bereich des Blendrahmens 1 zum Wärmetauscher 48 zu befördern, während die von der Raumaußenseite 14 durch den Wärmetauscher 48 angewärmte Frischluft in einem unteren Bereich in das Rauminnere 13 gelangt. Entsprechend variiert dann die Unterteilung des Lüfterrohres 8 entlang seiner Längsachse 9.

Statt des Wärmetauschers 48 oder zusätzlich zu diesem ist es auch möglich, einen Ventilator in das Lüfterrohr 8 einzubauen, der dann einen aktiven Luftaustausch bewirkt, ohne die optische Gestaltung des Raumes zu beeinträchtigen.

Darüber hinaus liegt es im Rahmen der Erfindung, den Wärmetauscher 48 gegen eine Klimaanlage auszutauschen. Diese kann über das Lüfterrohr 8 an die Luftzuführ-/Luftabführbereiche 18, 18' angeschlossen werden und den Raum mit kalter oder warmer Luft versorgen. Durch eine entsprechende Ausgestaltung des Lüfterrohres 8 und der umgebenden Profile ist es auch möglich, das Lüftungssystem an eine zentrale Klimaanlage anzuschließen, um ein optimales Lüftungs- und auch Energiemanagement des Raumes in Verbund mit anderen Räumen zu gewährleisten.

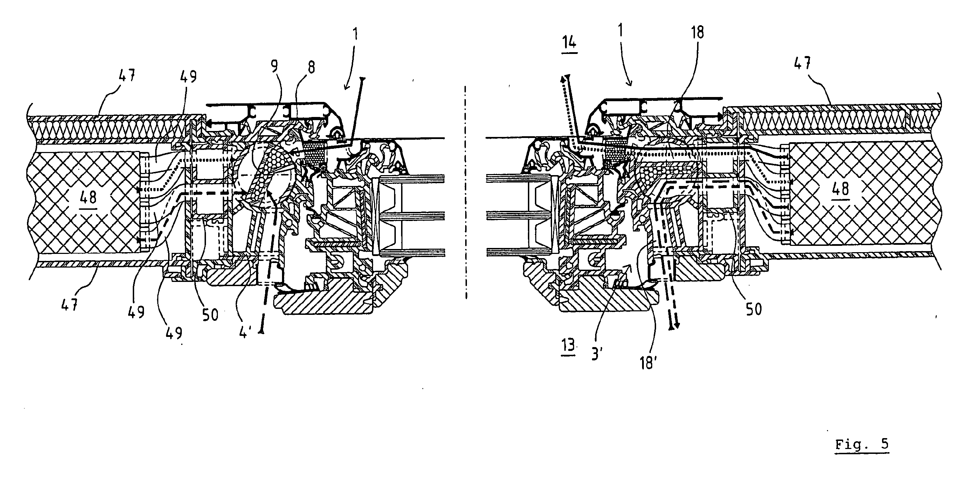

Bei dem Ausführungsbeispiel der Erfindung gemäß Fig. 5 ist der Wärmetauscher 48 über das Lüfterrohr 8 ansteuerbar. Die Anschlüsse 49 des Wärmetausches 48 sind über ein Adapterprofil 50 mit den Kammern des Lüfterrohres 8 verbunden und können in der in Fig. 5 rechten Winkelposition des Lüfterrohres 8 eine Verbindung des Innenraums 13 mit dem Außenraum 14 über den Wärmetauscher 48 herstellen bzw. über den in der linken Hälfte der Figur dargestellten Einstellung die Verbindung unterbrechen. Die vier Anschlüsse 49 des Wärmetauschers 48 sind über die Lüftungswege des Lüfterrohres 8 und die Luftzuführ- bzw. Luftabführbereiche 18, 18' mit dem Innen- bzw. Außenraum 13, 14 verbunden.

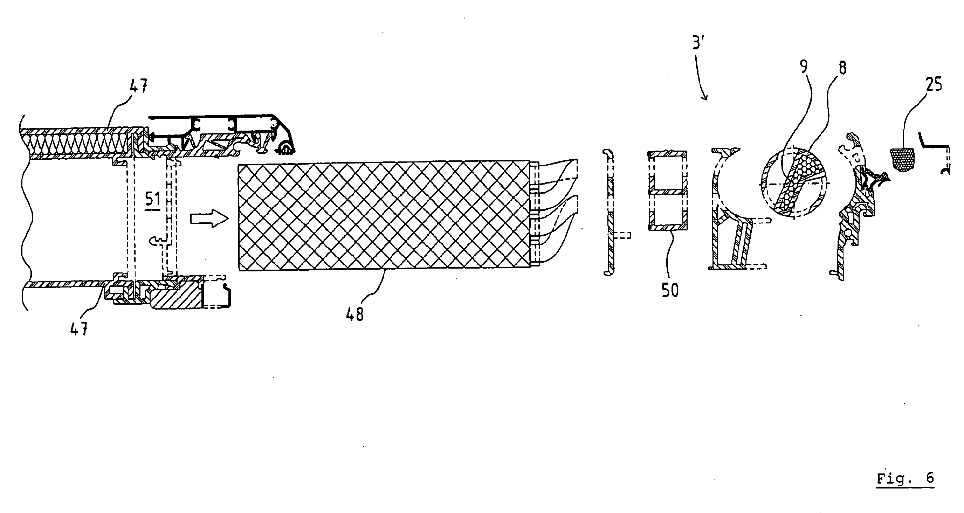

Für die Wartung des Wärmetausches 48 ist es möglich, das Hohlprofil des erfindungsgemäßen Blendrahmens 1 aus mehreren, lösbar aneinander befestigbaren Teilen aufzubauen (Fig. 6). Die einzelnen Teile des Hohlprofils 3' sind hierfür dergestalt ausgebildet, daß bei geöffnetem Fenster ein innenliegendes Profilteil nach dem anderen aus dem weiterhin an der Wand befestigten Rahmen 1 herausnehmbar ist. Bei vollständigem Herausnehmen der inneren Einzelteile ist so ein Eingriffsschacht 51 geschaffen, durch den der Wärmetauscher 48 zur Wartung aus seinem Profil 47 herausgezogen werden kann.

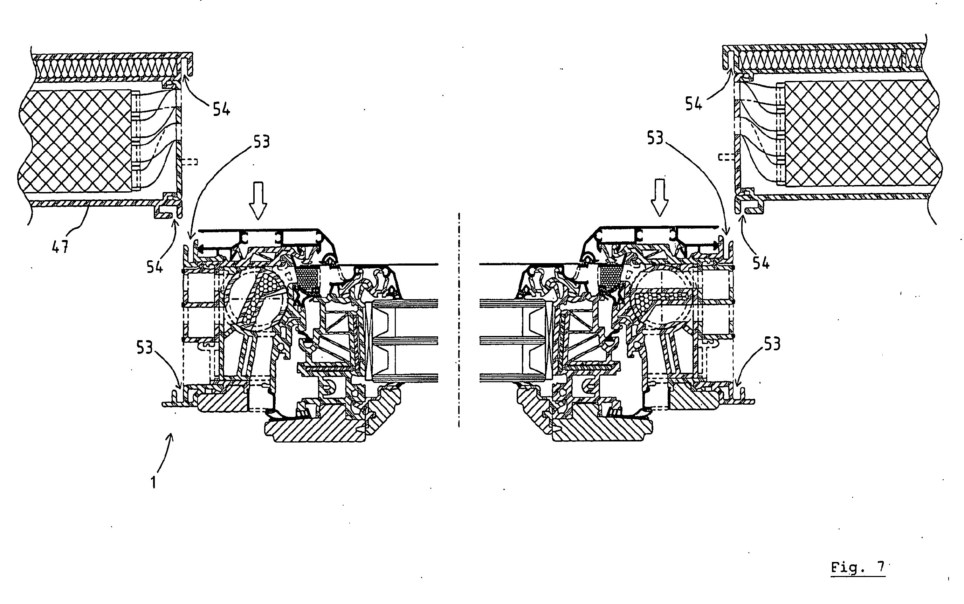

Besonders vorteilhaft ist die Ausbildung eines Reversionsrahmens, der den Einbau eines erfindungsgemäßen Blendrahmens 1 bzw. ebenso dessen Ausbau deutlich vereinfacht (Fig. 7). Diese Version des Rahmens kann auch ohne das Lüftungssystem verwendet werden. Durch die Anbringung eines Kopplungsprofils 52 an das Hohlprofil 3 bzw. an das Grundhohlprofil 4 des Blendrahmens 1 weist der erfindungsgemäße Rahmen Eingriffsbereiche 53 für ein komplementär ausgebildetes, wandseitiges Profil auf, in das der Reversionsrahmen eingebracht bzw. aus dem der Rahmen in der Ausbausituation herausgezogen werden kann und das hier dem Wärmetauscherprofil 47 entspricht. Statt eines Wärmetauscherprofils 47 ist es auch denkbar, Profile, die lediglich die komplementären Eingriffsbereiche 54 aufweisen, vorzusehen.

Durch diese Ausgestaltung des Rahmens 3 ist dessen Handhabung deutlich vereinfacht. Der Rahmen 3 kann ohne Beschädigungen von angrenzenden Laibungen oder Fensterbänken wieder ausgebaut werden.

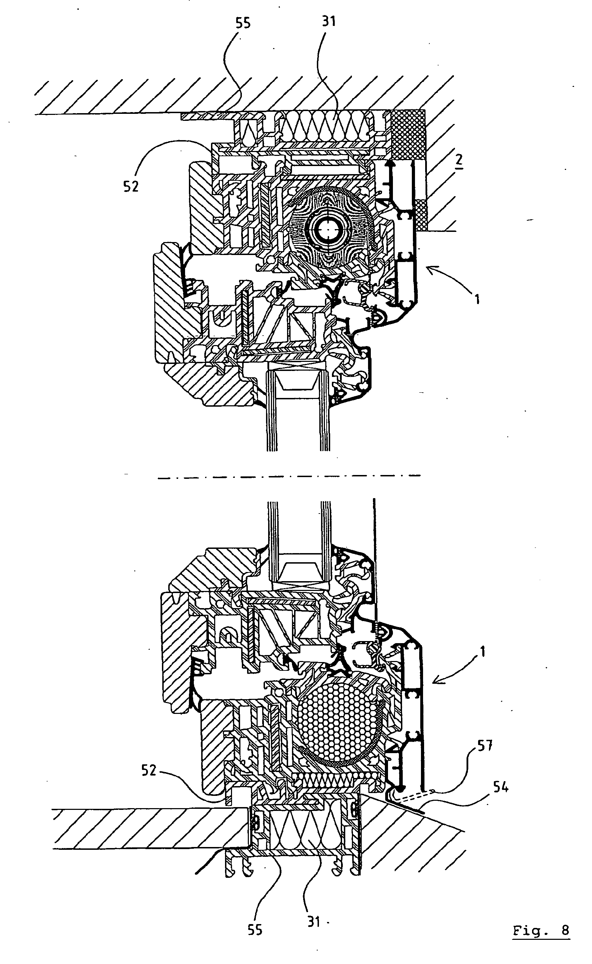

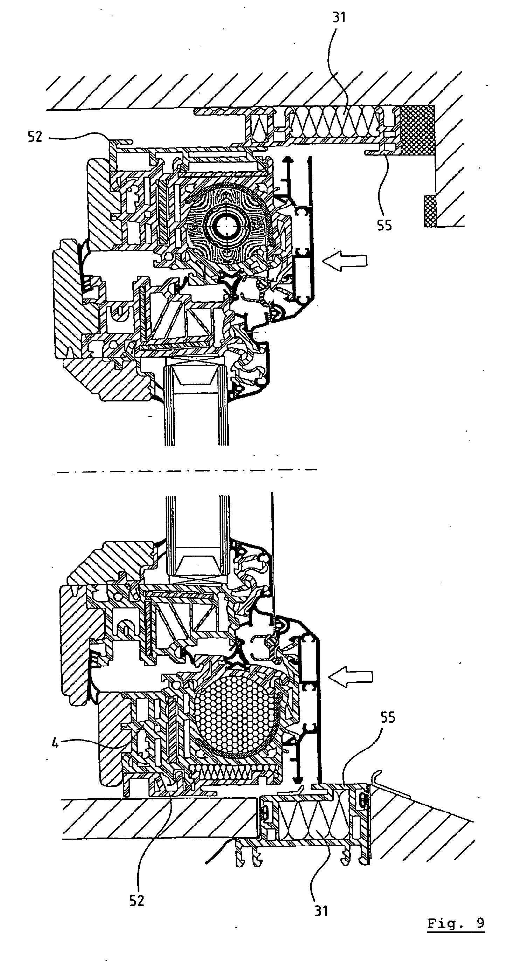

Neben dem Horizontalschnitt ist der als Reversionsfenster ausgebildete Erfindungsgegenstand in Fig. 8 in einem Vertikalschnitt dargestellt. Ein Rastprofil 54 ist mit einer Sollbruchstelle versehen, so daß durch dessen Abknicken in die mit 57 bezifferte Position sowie Hauslösen eventuell zusätzlich vorhandener Befestigungsmittel der komplette Rahmen mit Ausnahme der komplementären Kopplungsprofile 55 in die in Fig. 9 dargestellte Ausbauposition verschoben werden kann.

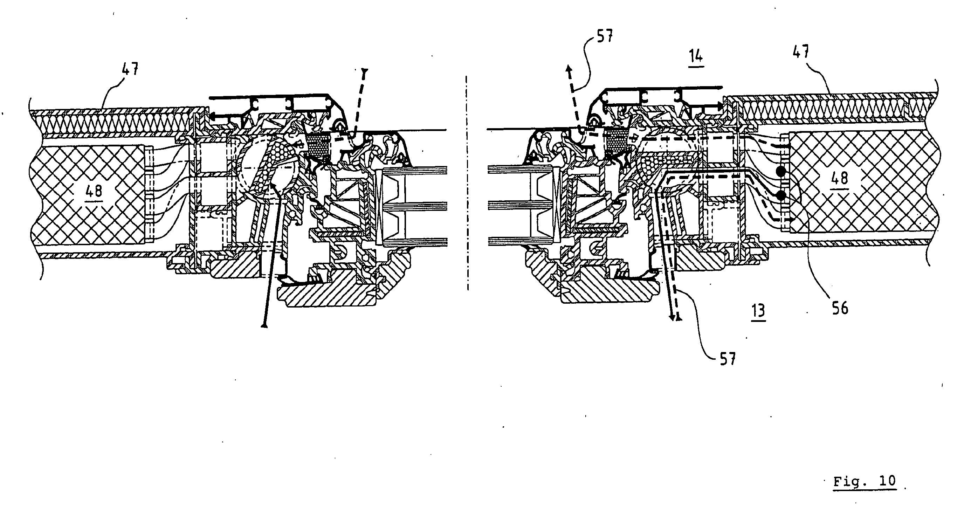

Es liegt ebenfalls im Rahmen der Erfindung, zusätzlich zu einem Wärmetauscher 48 eine Klimaanlage an den Raum anzuschließen, welche beispielsweise in einem dem Blendrahmen zugeordneten Profil eingebaut oder auch getrennt von dem Blendrahmen anschließbar ist. Die Zufuhr von Luft einer bestimmten Temperatur in den Innenraum 13 führt zu einer Überdrucksituation. Bei normaler Funktionsweise des Wärmetauschers 48 birgt dieses die Gefahr des Eindringens von Außenluft einer anderen als der gewünschten Temperatur in sich. Es ist daher erfindungsgemäß vorgesehen, einen Luftweg des Wärmetauschers 48 mit Rückschlagventilen 56 zu verschließen, wobei zusätzlich der Drehsinn eines zum Wärmetauscher gehörenden Lüfterrades geändert wird (Fig. 10). Die dann erfolgende Abgabe der Rauminnenluft durch den verbliebenen offenen Weg des Wärmetausches ist durch den Pfeil 57 gekennzeichnet.

## Patentansprüche

1. Rahmen zur Verwendung in Wandöffnungen von Räumen, insbesondere für Türen, Fenster oder andere Fassadenelemente, mit einem Rahmenprofil (3), welches zumindest ein Grundrahmenprofil (4) umfasst und einen mit der Innen- und/oder Außenseite (13, 14) des Raumes lüftungsmäßig verbindbaren Hohlraum (7) aufweist, wobei in dem Hohlraum (7) ein bewegliches und mit einer parallel zur Längserstreckung des Rahmenprofils (3) verlaufenden Hauptachse (9) versehenes Lüfterelement (8) angeordnet ist, welches in dem Hohlraum (7) aufgrund seiner Form einen Luftweg ausbildet und das Teil eines Lüftungssystems des Rahmens ist, wobei das Grundrahmenprofil (4) zumindest teilweise den Hohlraum (7) ausbildet, **dadurch gekennzeichnet, dass** das bewegliche Lüfterelement (8) als drehbares Lüfterrohr (8) ausgebildet ist und der Hohlraum in den Seiten- und oberen und unteren Bereichen des Rahmens vorhanden ist.

2. Rahmen nach Anspruch 1, **dadurch gekennzeichnet, dass** der Hohlraum (7) teilweise geöffnet und mit verschiedenen Profilleisten (23) zur weiteren Ausbildung des Rahmenprofils (3) abdeckbar ist.

3. Rahmen nach Anspruch 1 oder 2, **dadurch gekennzeichnet, dass** der Hohlraum (7) im Querschnitt gerundet ist.

4. Rahmen nach einem der Ansprüche 1 bis 3, **dadurch gekennzeichnet, dass** sich der Hohlraum (7) zumindest über im wesentlichen eine Seite des Rahmens erstreckt.

5. Rahmen nach einem der Ansprüche 1 bis 4, **dadurch gekennzeichnet, dass** das Rahmenprofil (3) zumindest auf zwei Seiten des Hohlraumes (7) befindliche Luftzuführ- bzw. Luftabführbereiche (18, 18') aufweist.

6. Rahmen nach Anspruch 5, **dadurch gekennzeichnet, dass** das Lüfterelement (8) zumindest eine Lüfterelementkammer (11, 12) aufweist, die durch Bewegung des Lüfterelementes (8) eine Lüftungsverbindung zwischen den Luftzuführ- bzw. Luftabführbereichen (18, 18') schafft.

7. Rahmen nach einem der Ansprüche 5 oder 6, **dadurch gekennzeichnet, dass** das Lüfterelement (8) eine Hohlkammerdichtung (19) aufweist, durch die durch Bewegung des Lüfterelementes (8) die Lüftungsverbindung getrennt wird.

8. Rahmen nach einem der Ansprüche 5 bis 7, **dadurch gekennzeichnet, dass** ein Luftzuführ- bzw. Luftabführbereich (18, 18') zumindest einen Luftfilter aufweist.

9. Rahmen nach einem der Ansprüche 5 bis 8, **dadurch gekennzeichnet, dass** zumindest ein Zusatzprofil (23, 24) zur Begrenzung eines Luftzuführ- bzw. Luftabführbereiches (18, 18') vorgesehen ist.

10. Rahmen nach Anspruch 9 mit einem dem Rahmen (1) zugeordneten Flügelprofil (22), **dadurch gekennzeichnet, dass** das Zusatzprofil (24) Teil des Flügelprofils (22) ist.

11. Rahmen nach einem der Ansprüche 1 bis 10, **dadurch gekennzeichnet, dass** das einen Motor (29) aufweisende Lüftungssystem mit einer Steuerung versehen ist, die die Bewegung des Lüfterelementes (8) durch den Motor (29) steuert.

12. Rahmen nach Anspruch 11, **dadurch gekennzeichnet, dass** der Motor (29) in dem Hohlraum (7) angeordnet ist.

13. Rahmen nach einem der Ansprüche 11 oder 12, **dadurch gekennzeichnet, dass** das Lüftungssystem zumindest einen Sensor aufweist und die Steuerung die Belüftung des Raumes in Abhängigkeit von dem Sensor aufgenommenen Steuerdaten steuert.

14. Rahmen nach einem der Ansprüche 1 bis 13, **dadurch gekennzeichnet, dass** eine Lüfterelementkammer (12) mit Dämmstoff ausgefüllt ist.

15. Rahmen nach einem der Ansprüche 1 bis 14, **dadurch gekennzeichnet, dass** das Lüftungssystem einen Wärmetauscher (48) umfasst.

16. Rahmen nach Anspruch 15, **dadurch gekennzeichnet, dass** der Wärmetauscher (48) zumindest teilweise in einer Wand (2) angeordnet ist.

17. Rahmen nach einem der Ansprüche 15 oder 16, **dadurch gekennzeichnet, dass** der Wärmetauscher (48) in einem an das Rahmenprofil (3) angesetzten Wärmetauscherprofil (47) angeordnet ist.

18. Rahmen nach einem der Ansprüche 15 bis 17, **dadurch gekennzeichnet, dass** der Wärmetauscher (48) über das bewegliche Lüfterelement (8) lüftungsmäßig mit der Innen- und Außenseite (13, 14) des Raumes verbindbar ist.

19. Rahmen nach einem der Ansprüche 5 bis 10 sowie einem der Ansprüche 15 bis 18, **dadurch gekennzeichnet, dass** der Wärmetauscher (48) unabhängig von dem Lüfterelement (8) an den Luftzuführ- bzw. Luftabführbereich (18, 18') angeschlossen ist.

20. Rahmen nach einem der Ansprüche 1 bis 19, **dadurch gekennzeichnet, dass** der nicht Teile eines Lüftungssystems aufweisende Bereich des Hohlraumes (7) mit Dämmstoff (31) abgedichtet ist.

21. Rahmen nach einem der Ansprüche 1 bis 20, **dadurch gekennzeichnet, dass** das Grundrahmenprofil (4) als Grundhohlprofil (4) ausgebildet ist.

22. Rahmen nach einem der Ansprüche 1 bis 21, **dadurch gekennzeichnet, dass** das Rahmenprofil (3) als Hohlprofil (3) ausgebildet ist.

23. Rahmen nach einem der Ansprüche 1 bis 22, **gekennzeichnet durch** ein Reversionsprofil zur lösbaren Festlegung des Rahmens (1).

24. Rahmen nach Anspruch 23, **dadurch gekennzeichnet, dass** das Reversionsprofil zumindest zwei Teile (52, 55) umfasst, von denen einer wandseitig festlegbar und einer dem Rahmen (1) zugeordnet ist und die jeweils zumindest einen Befestigungsbereich (53, 54) zur Verbindung des Rahmens (1) mit der Wand (2) aufweisen.

25. Rahmen nach Anspruch 24, **dadurch gekennzeichnet, dass** der rahmenseitige Teil (52) des Reversionsprofils Teil des Rahmenprofils (3) ist.

26. Rahmen nach einem der Ansprüche 1 bis 25, **dadurch gekennzeichnet, dass** das Lüftungssystem eine Klimaanlage umfasst.

27. Fenster, **gekennzeichnet durch** einen Rahmen (1) nach einem der Ansprüche 1 bis 26.

## Claims

1. Frame for use in wall openings of rooms, particularly for doors, windows or other façade elements, having a frame profile (3) that comprises at least a basic frame profile (4) and has a cavity (7) that can be connected with the inside and/or outside (13, 14) of the room, in terms of ventilation, wherein a ventilator element (8) that is movable and is provided with a main axis (9) that runs parallel to the longitudinal expanse of the frame profile (3) is disposed in the cavity (7), which element forms an air path in the cavity (7), on the basis of its shape, and is part of a ventilation system of the frame, wherein the basic frame profile (4) forms the cavity (7), at least in part, **characterized in that** the movable ventilator element (8) is configured as a rotatable ventilator pipe (8) and the cavity is present in the side regions and upper and lower regions of the frame.

2. Frame according to claim 1, **characterized in that** the cavity (7) is partially open and can be covered with different profile strips (23) for further configuration of the frame profile (3).

3. Frame according to claim 1 or 2, **characterized in that** the cavity (7) is rounded in cross-section.

4. Frame according to one of claims 1 to 3, **characterized in that** the cavity (7) extends at least essentially over one side of the frame.

5. Frame according to one of claims 1 to 4, **characterized in that** the frame profile (3) has air feed or air discharge regions (18, 18') at least on two sides of the cavity (7).

6. Frame according to claim 5, **characterized in that** the ventilator element (8) has at least one ventilator element chamber (11, 12) that creates a ventilation connection between the air feed and air discharge regions (18, 18') by means of movement of the ventilator element (8).

7. Frame according to one of claims 5 or 6, **characterized in that** the ventilator element (8) has a hollow chamber seal (19) by means of which the ventilator connection is cut off by means of movement of the ventilator element (8).

8. Frame according to one of claims 5 to 7, **characterized in that** an air feed or air discharge region (18, 18') has at least one air filter.

9. Frame according to one of claims 5 to 8, **characterized in that** the at least one additional profile (23, 24) is provided for delimitation of an air feed or air discharge region (18, 18').

10. Frame according to claim 9, having a casement profile (22) assigned to the frame (1), **characterized in that** the additional profile (24) is part of the casement profile (22).

11. Frame according to one of claims 1 to 10, **characterized in that** the ventilation system having a motor (29) is provided with a controller that controls the movement of the ventilator element (8) by means of the motor (29).

12. Frame according to claim 11, **characterized in that** the motor (29) is disposed in the cavity (7).

13. Frame according to one of claims 11 or 12, **characterized in that** the ventilation system has at least one sensor and the controller controls the ventilation of the room as a function of control data recorded by the sensor.

14. Frame according to one of claims 1 to 13, **characterized in that** a ventilator element chamber (12) is filled with insulation material.

15. Frame according to one of claims 1 to 14, **characterized in that** the ventilation system comprises a heat exchanger (48).

16. Frame according to claim 15, **characterized in that** the heat exchanger (48) is disposed in a wall (2), at least in part.

17. Frame according to one of claims 15 or 16, **characterized in that** the heat exchanger (48) is disposed in a heat exchanger profile (47) set onto the frame profile (3).

18. Frame according to one of claims 15 to 17, **characterized in that** the heat exchanger (48) can be connected, in terms of ventilation, with the inside and outside (13, 14) of the room, by way of the movable ventilator element (8).

19. Frame according to one of claims 5 to 10 as well as one of claims 15 to 18, **characterized in that** the heat exchanger (48) is connected with the air feed or air discharge region (18, 18'), independent of the ventilator element (8).

20. Frame according to one of claims 1 to 19, **characterized in that** the region of the cavity not having parts of a ventilation system is sealed with insulation material (31).

21. Frame according to one of claims 1 to 20, **characterized in that** the basic frame profile (4) is configured as a hollow basic frame profile (4).

22. Frame according to one of claims 1 to 21, **characterized in that** the frame profile (3) is configured as a hollow profile (3).

23. Frame according to one of claims 1 to 22, **characterized by** a reversion profile for releasable fixation of the frame (1).

24. Frame according to claim 23, **characterized in that** the reversion profile comprises at least two parts (52, 55), one of which can be fixed in place on the wall side and one of which is assigned to the frame (1), and which have at least one fastening region (53, 54) for connection of the frame (1) with the wall (2), respectively.

25. Frame according to claim 24, **characterized in that** the frame-side part (52) of the reversion profile is part of the frame profile (3).

26. Frame according to one of claims 1 to 25, **characterized in that** the ventilation system comprises an air conditioning system.

27. Window **characterized by** a frame (1) according to one of claims 1 to 26.

## Revendications

1. Cadre destiné à être utilisé dans des ouvertures de murs de salles, en particulier pour des portes, fenêtres ou autres éléments de façade, avec un profilé de cadre (3) qui comporte au moins un profilé de cadre de base (4) et un espace creux (7) pouvant être relié en termes de ventilation au côté intérieur et/ou extérieur (13, 14) de la salle, dans l'espace creux (7) étant disposé un élément de ventilateur (8) mobile et pourvu d'un axe principal (9) s'étendant parallèlement à l'étendue longitudinale du profilé de cadre (3), lequel élément de ventilateur (8) réalise un passage d'air dans l'espace creux (7) en raison de sa forme et fait partie d'un système de ventilation du cadre, le profilé de cadre de base (4) réalisant au moins en partie l'espace creux (7), **caractérisé en ce que** l'élément de ventilateur (8) mobile est réalisé sous forme de tube de ventilateur rotatif (8) et l'espace creux est présent dans les zones latérales et supérieures et inférieures du cadre.

2. Cadre selon la revendication 1, **caractérisé en ce que** l'espace creux (7) est partiellement ouvert et peut être recouvert par différentes barres de profilé (23) pour poursuivre la réalisation du profilé de cadre (3).

3. Cadre selon la revendication 1 ou 2, **caractérisé en ce que** l'espace creux (7) est arrondi en section transversale.

4. Cadre selon l'une quelconque des revendications 1 à 3, **caractérisé en ce que** l'espace creux (7) s'étend au moins sur sensiblement un côté du cadre.

5. Cadre selon l'une quelconque des revendications 1 à 4, **caractérisé en ce que** le profilé de cadre (3) présente des zones d'amenée ou d'évacuation d'air (18, 18') se trouvant au moins sur deux côtés de l'espace creux (7).

6. Cadre selon la revendication 5, **caractérisé en ce que** l'élément de ventilateur (8) présente au moins une chambre d'élément de ventilateur (11, 12), qui crée par le déplacement de l'élément de ventilateur (8) une liaison de ventilation entre les zones d'amenée ou d'évacuation d'air (18, 18').

7. Cadre selon l'une quelconque des revendications 5 ou 6, **caractérisé en ce que** l'élément de ventilateur (8) présente une garniture de chambre creuse (19), par laquelle la liaison de ventilation est séparée par le déplacement de l'élément de ventilateur (8).

8. Cadre selon l'une quelconque des revendications 5 à 7, **caractérisé en ce qu'**une zone d'amenée ou d'évacuation d'air (18, 18') présente au moins un filtre à air.

9. Cadre selon l'une quelconque des revendications 5 à 8, **caractérisé en ce qu'**au moins un profilé supplémentaire (23, 24) est prévu pour la délimitation d'une zone d'amenée ou d'évacuation d'air (18, 18').

10. Cadre selon la revendication 9 avec un profil de battant (22) associé au cadre (1), **caractérisé en ce que** le profilé supplémentaire (24) fait partie du profilé de battant (22).

11. Cadre selon l'une quelconque des revendications 1 à 10, **caractérisé en ce que** le système de ventilation présentant un moteur (29) est pourvu d'une commande qui commande le déplacement de l'élément de ventilateur (8) par le moteur (29).

12. Cadre selon la revendication 11, **caractérisé en ce que** le moteur (29) est disposé dans l'espace creux (7).

13. Cadre selon l'une quelconque des revendications 11 ou 12, **caractérisé en ce que** le système de ventilation présente au moins un capteur et la commande commande la ventilation de l'espace en fonction des données de commande reçues par le capteur.

14. Cadre selon l'une quelconque des revendications 1 à 13, **caractérisé en ce qu'**une chambre d'élément de ventilateur (12) est remplie de matériau isolant.

15. Cadre selon l'une quelconque des revendications 1 à 14, **caractérisé en ce que** le système de ventilation comporte un échangeur de chaleur (48).

16. Cadre selon la revendication 15, **caractérisé en ce que** l'échangeur de chaleur (48) est disposé au moins en partie dans un mur (2).

17. Cadre selon l'une quelconque des revendications 15 ou 16, **caractérisé en ce que** l'échangeur de chaleur (48) est disposé dans un profilé d'échangeur de chaleur (47) placé sur le profilé de cadre (3).

18. Cadre selon l'une quelconque des revendications 15 à 17, **caractérisé en ce que** l'échangeur de chaleur (48) peut être relié par l'élément de ventilateur mobile (8) par ventilation au côté intérieur et extérieur (13, 14) de la salle.

19. Cadre selon l'une quelconque des revendications 5 à 10 ainsi que l'une quelconque des revendications 15 à 18, **caractérisé en ce que** l'échangeur de chaleur (48) est raccordé indépendamment de l'élément de ventilateur (8) à la zone d'amenée ou d'évacuation d'air (18, 18').

20. Cadre selon l'une quelconque des revendications 1 à 19, **caractérisé en ce que** la zone de l'espace creux (7) ne présentant pas de parties d'un système de ventilation est rendue étanche avec un matériau isolant (31).

21. Cadre selon l'une quelconque des revendications 1 à 20, **caractérisé en ce que** le profilé de cadre de base (4) est réalisé comme un profilé creux de base (4).

22. Cadre selon l'une quelconque des revendications 1 à 21, **caractérisé en ce que** le profilé de cadre (3) est réalisé comme un profilé creux (3).

23. Cadre selon l'une quelconque des revendications 1 à 22, **caractérisé par** un profilé réversible pour la fixation amovible du cadre (1).

24. Cadre selon la revendication 23, **caractérisé en ce que** le profilé réversible comporte au moins deux parties (52, 55), dont une peut être fixée côté mur et une est associée au cadre (1) et qui présentent respectivement au moins une zone de fixation (53, 54) pour la liaison du cadre (1) avec le mur (2).

25. Cadre selon la revendication 24, **caractérisé en ce que** la partie côté cadre (52) du profilé réversible fait partie du profilé de cadre (3).

26. Cadre selon l'une quelconque des revendications 1 à 25, **caractérisé en ce que** le système de ventilation comporte une installation de climatisation.

27. Fenêtre **caractérisée par** un cadre (1) selon l'une quelconque des revendications 1 à 26.
